# EUROPEAN PATENT SPECIFICATION

(11) **EP 4 446 180 B1**
(45) Date of publication and mention of the grant of the patent: **06.05.2026**
(21) Application number: 24155752.9
(22) Date of filing: 05.02.2024
(51) Int. Cl.: B60T 7/22, B60W 30/18

(54) **PRELIMINARY BRAKING DEVICE AND PRELIMINARY BRAKING METHOD**
VORBREMSVORRICHTUNG UND VORBREMSVERFAHREN
DISPOSITIF DE FREINAGE PRÉLIMINAIRE ET PROCÉDÉ DE FREINAGE PRÉLIMINAIRE

(30) Priority: 12.04.2023 JP 2023065190
(43) Date of publication of application: 16.10.2024
(73) Proprietor: Suzuki Motor Corporation, Shizuoka 432-8611 (JP)
(72) Inventor: AOSHIMA, Hidemichi, HAMAMATSU-SHI, 432-8611 (JP)
(74) Representative: Plasseraud IP

(56) References cited:
- EP-A1- 2 990 276
- US-A1- 2014 067 220
- US-A1- 2017 259 813

## Description

### BACKGROUND OF THE INVENTION

### Field of the Invention

The present invention relates to a preliminary braking technique for a vehicle traveling in a deceleration area such as an area before an intersection installed on a road.

### Description of the Related Art

According to the Road Traffic Act in Japan, a driver of a vehicle approaching an intersection at a crossroad or a T junction is required to reduce the speed of the vehicle, except for a predetermined case in which the vehicle travels on a priority road. In recent years, a technique for preventing or reducing the rear-end collision by a following vehicle immediately before an intersection on a road has been developed. For example, Japanese Patent Application Publication No. 2018-203252 discloses a technique relating to the operation at an intersection among three vehicles for performing adaptive cruise control in tandem in which a host vehicle is traveling between other two vehicles. To prepare for collision, the technique is designed to pressurize the brake line by a minimum amount of brake pressure necessary to place brake pads on brake disks, in place of a reduction in the inter-vehicle distance to a front vehicle at the intersection. As a result, when a driver of the host vehicle applies the brake, the brake line can react quickly to prevent the host vehicle from colliding with the front vehicle.

In the above-described technique, however, when the inter-vehicle distance to a rear vehicle following the host vehicle is short, the rear vehicle may collide with the host vehicle. This is because the host vehicle has high responsiveness in the brake line, which may cause a fear that slightly braking the host vehicle may lead to sudden braking. Therefore, it is desirable to provide a control method enabling a vehicle to safely enter a deceleration area at an intersection on a road. Another example of prior art describing a vehicle braking based on external object communications can be found in US 2014/067220 A1.

### SUMMARY OF THE INVENTION

The present invention is made in consideration of such circumstances and aims to provide a preliminary braking device and a preliminary braking method for performing preliminary braking under a predetermined condition to enable a vehicle to safely enter a deceleration area on a road.

A preliminary braking device according to the present embodiment is defined in claim 1.

A preliminary braking method according to the present embodiment is defined in claim 11.

### EFFECT OF THE INVENTION

According to the present invention, preliminary braking is performed under the predetermined condition to enable the vehicle to safely enter a deceleration area on a road.

### BRIEF DESCRIPTION OF THE DRAWINGS

Fig. 1 is a block diagram showing the configuration of a vehicle equipped with a preliminary braking device according to the embodiment of the present invention.
Fig. 2 is a schematic view showing a deceleration area on a road to which the vehicle is going to enter.
Fig. 3 is a flowchart showing the operation of the preliminary braking device according to the embodiment of the present invention.

### DETAILED DESCRIPTION

A preliminary braking device and a preliminary braking method according to the present invention will be described in detail below with reference to the accompanying drawings. In the following description, "front side" and "rear side" are defined in a direction viewed from a driver sitting on a driver seat of a vehicle.

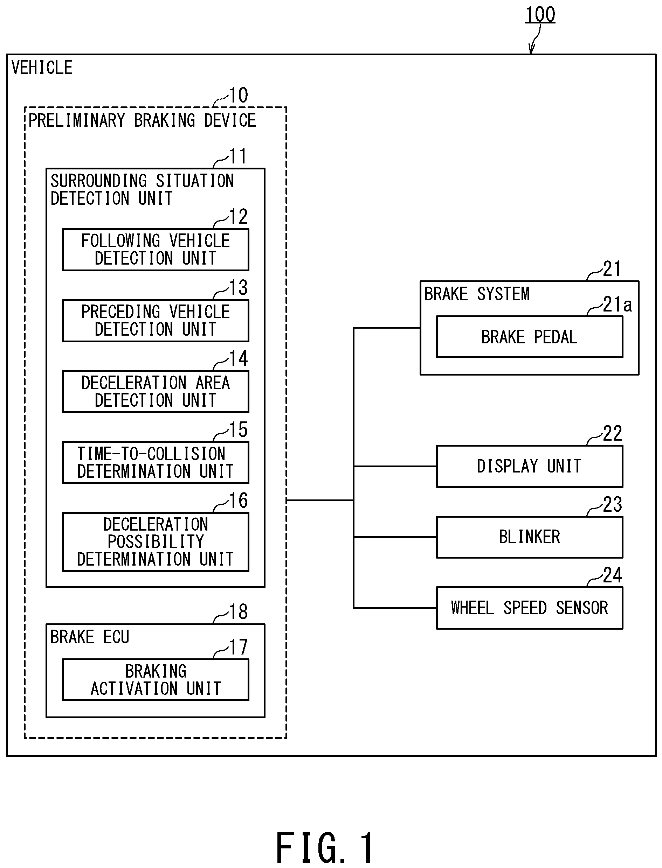

Fig. 1 is a block diagram showing the configuration of a vehicle 100 equipped with a preliminary braking device 10 according to the embodiment of the present invention. In Fig. 1, in the configuration of the vehicle 100, some configuration having low relevancy with the preliminary braking device 10 such as an engine is omitted in illustration.

As shown in Fig. 1, the preliminary braking device 10 according to the present embodiment includes a surrounding situation detection unit 11 and a braking activation unit 17 (e.g., a brake ECU 18). The function of the braking activation unit 17 is exerted as the function of the brake ECU (Electronic Control Unit) 18 for electronically controlling, for example, a brake system 21 (e.g., a brake pedal 21a).

As shown in Fig. 1, the preliminary braking device 10 is connected to peripheral devices such as the brake system 21, a display unit 22, a blinker (or a direction indicator) 23, and a wheel speed sensor 24 through an in-vehicle network 25 in an information-exchangeable manner. The in-vehicle network 25 is configured by, for example, a bus of CAN-FD (i.e., a controller area network with flexible data rate).

In the following, the configurations 11 and 17 of the preliminary braking device 10, and the relationship between the configurations 11, 17 and the peripheral devices 21-24 connected to the preliminary braking device 10 will be described in detail.

The surrounding situation detection unit 11 is configured to acquire the arrangement information of objects and markings outside the vehicle 100 in a range from the front side to the rear side of the vehicle 100. The surrounding situation detection unit 11 includes a sensing device selected from among, for example, a front camera, a rear camera, a GPS (Global Positioning System), a millimeter wave radar, a communication device (CVSS: Connected Vehicles Support Systems), and a sonar sensor, or a combination of the above components.

Each of the front camera and the rear camera is, for example, a stereo camera including two lenses having slightly different positions in installment. The front camera captures an image of the front side of the vehicle 100 from an inside of a vehicle cabin through a front glass to acquire and analyze image data. The rear camera captures an image of the rear side of the vehicle 100 from the inside of the vehicle cabin through a rear glass to acquire and analyze image data. Since the stereo camera is capable of capturing a stereoscopic image of an object on the front side or the rear side of the vehicle 100, it is possible to measure an intervehicle distance to the object with high accuracy. Each of the front camera and the rear camera is not necessarily limited in installment position and in the number of lenses as long as each camera can acquire image data covering the front side or the rear side of the vehicle 100. It is possible to provide multiple sets of front cameras and rear cameras.

The GPS is configured to measure the position of the vehicle 100 by using an artificial satellite. The millimeter wave radar is configured to measure distances, speed, and installation angles with respect to target objects by using radio waves in a millimeter wave band. The movement and directivity of a preceding vehicle 200 or a following vehicle 300 can be identified by using each of the GPS and the millimeter wave radar. In addition, the traveling speed of the preceding vehicle 200 or the following vehicle 300 can be calculated by applying the traveling speed of the vehicle 100 obtained from the wheel speed sensor 24 to the sensing information from various kinds of sensing devices configuring the surrounding situation detection unit 11. The sensing devices are normally regarded as standard equipment of the vehicle 100 in recent years. Therefore, it is possible to reuse the existing devices for the surrounding situation detection unit 11 without installing special devices for the surrounding situation detection unit 11 in the preliminary braking device 10. Using the sensing devices, the surrounding situation detection unit 11 can exert functions of a following vehicle detection unit 12, a preceding vehicle detection unit 13, a deceleration area detection unit 14, a time-to-collision determination unit (or a TTC determination unit) 15, and a deceleration possibility determination unit 16.

The following vehicle detection unit 12 is configured to detect the vehicle speed of the following vehicle 300 following the vehicle 100, and an inter-vehicle distance D to the following vehicle 300. The following vehicle 300 may be another automobile following the vehicle 100 or another automobile controlled to automatically perform a tracking travel (e.g., Adaptive Cruise Control) following the vehicle 100. The following vehicle detection unit 12 includes, for example, a millimeter wave radar, a rear camera, an intervehicle communication device, or the like.

The inter-vehicle distance D to the following vehicle 300 may be defined by a physical distance to the following vehicle 300 expressed in meters or by a time-to-collision (TTC). The TTC is a time before collision of two automobiles, which can be calculated by dividing the inter-vehicle distance D by the relative speed between two automobiles traveling in tandem. The following description refers to an example for calculating the inter-vehicle distance D to the following vehicle 300 using the TTC.

However, the inter-vehicle distance D may be simply defined by the physical distance without strictly calculating the TTC. This is because the vehicle 100 traveling just before an intersection 30a may not generally travel at high speed, which may hardly cause a premature operation or an operation delay without using the TTC. In addition, when the inter-vehicle distance D is defined by the physical distance, it is advantageous for a passenger to visually recognize and easily grasp the timing as to activation of preliminary braking.

The preceding vehicle detection unit 13 is configured to detect an inter-vehicle distance M to the preceding vehicle 200 ahead of the vehicle 100, and the vehicle speed of the preceding vehicle 200. Similar to the following vehicle 300, the preceding vehicle 200 may be another automobile ahead of the vehicle 100 or another automobile automatically followed by the vehicle 100. Similar to the following vehicle detection unit 12, the preceding vehicle detection unit 13 includes, for example, a millimeter wave radar, a front camera, an intervehicle communication device or the like.

The deceleration area detection unit 14 is configured to detect a deceleration area 30 in a traveling lane ahead of the vehicle 100.

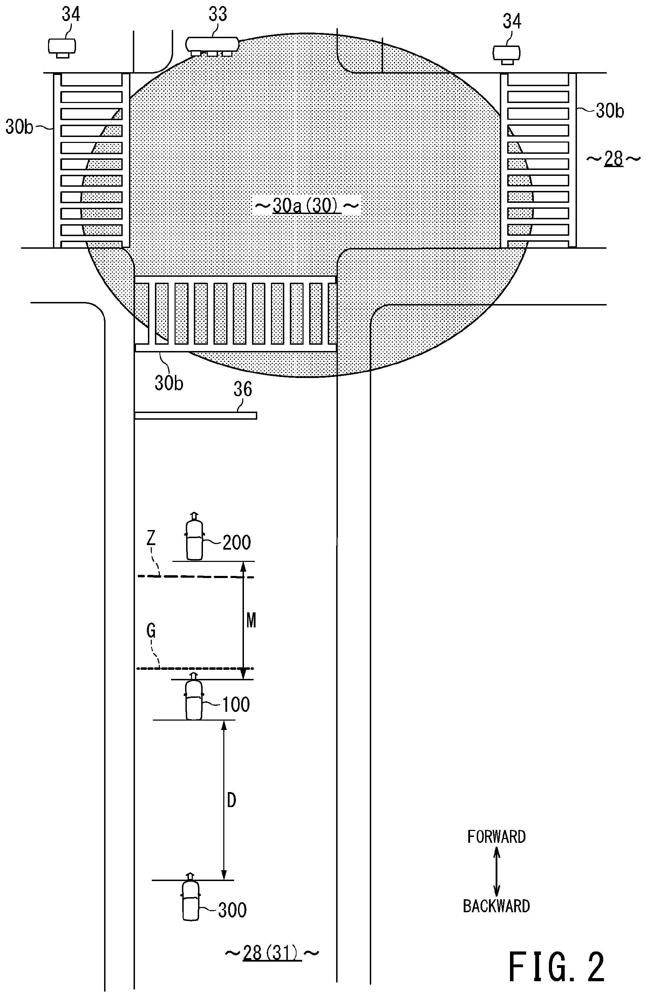

Fig. 2 is a schematic view of the deceleration area 30 (e.g., an intersection 30a) on a road 28 to which the vehicle 100 is going to enter.

For example, as shown in Fig. 2, the deceleration area 30 indicates the intersection 30a, a railroad crossing, a crosswalk 30b, an area marked in red color on a road, and an area before a stop sign of a road. In the deceleration area 30, the vehicle 100 is required to decelerate or temporarily stop.

However, when a traveling lane 31 of the vehicle 100 is a priority road, the driver has no obligation to decelerate the vehicle 100 irrespective of the intersection 30a, and therefore it is preferable to preclude the intersection 30a on the priority road from a detection object of the deceleration area detection unit 14. The following description refers to an example in which the deceleration area 30 is the intersection 30a as shown in Fig. 2. For example, a beacon such as a traffic signal 33 may be installed in neighborhood of the intersection 30a. Therefore, it is possible to use a communication between the vehicle 100 and the beacon for detection of the intersection 30a.

In addition, the deceleration area detection unit 14 may detect the presence of the crosswalk 30b in view of rhombic markings painted in the traveling lane 31. In Japan, rhombic markings are painted on a road surface at positions 30 m and 50 m before the intersection 30a, which capacitates the driver to recognize the presence of the crosswalk 30b ahead and the distance to the crosswalk 30b ahead. Different from the traffic signal 33 vertically installed on the road 28, the crosswalk 30b painted on the surface of the road 28 is difficult to be detected by a front camera inside the vehicle cabin. In other words, the front camera tends to detect the distance to the crosswalk 30b to be shorter than the distance to the traffic signal 33. Therefore, it is preferable for the deceleration area detection unit 14 to calculate the distance from the vehicle 100 to the crosswalk 30b by using rhombic markings.

The brake system 21 is a series of mechanisms including the brake pedal 21a for decelerating the rotation of wheels of the vehicle 100. The brake system 21 may be a mechanical control system installed in an engine automobile or an electronic control system installed in an electric automobile. The brake system 21 is configured to automatically activate the preliminary braking for generating certain amount of deceleration weaker than or equal to a predetermined value under the control of the brake ECU 18.

When the vehicle 100 passes through a position before the deceleration area 30 by a predetermined distance (hereinafter, the position will be referred to as "a determination line G"), the TTC determination unit 15 calculates the time-to-collision (TTC) between the vehicle 100 and the following vehicle 300. When the driver suddenly applies the brake immediately before the intersection 30a as the vehicle 100 approaches the intersection 30a, the TTC determination unit 15 determines as to whether or not to evade the rear-end collision with the following vehicle 300. When the following vehicle 300 is not ready in time for the brake operation due to a short time-to-collision (TTC) after the driver of the vehicle 100 suddenly applies the brake, the TTC determination unit 15 determines the necessity of preliminary breaking by adding a margin time for determination that the following vehicle 300 might collide with the vehicle 100 in its rear end. Generally, a reaction time of the driver of the following vehicle 300 would be assumed about 0.6 seconds after the driver of the vehicle 100 starts to apply the brake, and therefore the TTC determination unit 15 uses a subtraction value obtained by subtracting 0.6 seconds from the time-to-collision (TTC), for the determination thereof. A position of the determination line G at which the TTC determination unit 15 starts the determination is about 60 m to 100 m before the deceleration area 30.

The deceleration possibility determination unit 16 is configured to estimate the possibility that the vehicle 100 would apply the brake in the deceleration area 30. For example, when the preceding vehicle 200 is decelerated in a predetermined inter-vehicle distance M from the vehicle 100, it may be highly likely that the vehicle 100 needs to apply the brake in response to the deceleration of the preceding vehicle 200. In such a case, the deceleration possibility determination unit 16 may assume high possibility that the vehicle 100 will apply the brake.

When the traffic signal 33 installed in the traveling lane 31 of the vehicle 100 in the deceleration area 30 shows a red signal (indicating vehicle's traveling prohibition) or when the driver assumes the switching of the traffic signal 33 from a blue signal (indicating vehicle's traveling permission) to a yellow signal (indicating vehicle's traveling caution) or from a yellow signal (indicating vehicle's traveling caution) to a red signal (indicating vehicle's traveling prohibition), it is highly likely that the driver be required to decelerate the vehicle 100. In addition, when the vehicle 100 exists in the deceleration area 30 while a traffic signal 34 for pedestrians on the crosswalk 30b laid along the traveling lane 31 shows a blue-blinking signal (indicating pedestrian's crossing caution), it is highly likely that the driver be required to decelerate the vehicle 100. This is because the blue-blinking signal of the traffic signal 34 for pedestrians (indicating pedestrian's crossing caution) may indicate the switching of the traffic signal 33 in the traveling lane 31 from a blue signal to a yellow signal in a short period of time. Furthermore, when the driver operates the right or left blinker 23 before the intersection 30a, it is likely that the driver be required to decelerate the vehicle 100. This is because, when turning the vehicle 100 right or left, it is highly likely that the driver be certainly required to decelerate the vehicle 100. Accordingly, in the above cases, the deceleration possibility determination unit 16 determines "a high possibility of deceleration of vehicle 100".

Upon determining the necessity of preliminary braking due to a short time-to-collision (TTC) which the TTC determination unit 15 calculates in lieu of the inter-vehicle distance D to the following vehicle 300 when the deceleration possibility determination unit 16 determines a high possibility of deceleration of the vehicle 100, the braking activation unit 17 causes the brake system 21 to activate preliminary braking. The preliminary braking indicates that weak deceleration smaller than or equal to a predetermined value is applied to the traveling speed of the vehicle 100 at a position which is located a predetermined distance before the intersection 30a, for example, at a position which is located several tens of meters before the intersection 30a (hereinafter, referred to as "braking start line Z"). When the driver has slightly applied the brake in advance, the braking activation unit 17 applies an amount of brake torque covering a shortfall of preliminary braking to adjust the deceleration to the prescribed deceleration. When the driver has sufficiently applied the brake in advance, the braking activation unit 17 does not activate the preliminary braking.

It is preferably for the braking activation unit 17 to reduce the deceleration to the predetermined deceleration causing about 0.1 G or less. The predetermined deceleration is set to a value which may reduce variations of deceleration due to sudden braking such that small influence will be exerted to the surroundings irrespective of unnecessary activation of preliminary breaking for bringing above a recognizable feeling of deceleration.

The reason why a high possibility of deceleration of the vehicle 100 is included in the conditions for activating the preliminary braking is to activate the preliminary braking in the limited situation anticipating a high possibility of preliminary braking. Providing a strict condition for activating the preliminary braking makes it possible to prevent the unnecessary activation of preliminary braking. However, when it is expected that the preliminary braking constantly produces very low deceleration, it is not necessary to provide the deceleration possibility determination unit 16.

The braking activation unit 17 starts to apply weak brake to the vehicle 100 at the position of the braking start line Z. This makes it possible to automatically reduce the speed of approaching the intersection 30a on the road 28 so that the vehicle 100 can approach the intersection 30a at safe speed. This can provide a margin time to the time-to-collision (TTC) with the following vehicle 300 when the vehicle 100 is suddenly stopped at the intersection 30a. Thus, it is possible to reduce a potential risk of collision between the vehicle 100 and the following vehicle 300. In this connection, it is preferable to entrust the driver to determine the release condition for releasing the preliminary braking after the vehicle 100 is sufficiently decelerated by the preliminary braking. In addition, it is possible to turn on a lamp on the display unit 22 such as instruments installed in the driver seat in response to the preliminary braking, thus notifying the driver of the preliminary braking being applied because of a short distance to the following vehicle 300.

Upon determining that the following vehicle 300 is accelerated, it is preferable for the braking activation unit 17 to activate the preliminary braking earlier than the preliminary braking to be determined when the following vehicle 300 travels at constant speed. In such a case, the braking start line Z may be set to a position before the normal position. This is because, as the following vehicle 300 is accelerated, it may be highly likely that the rear-end collision would occur when the vehicle 100 suddenly applies the brake. Applying the preliminary braking early in such a case, it is possible to avoid the occurrence of sudden braking of the vehicle 100 and to urge the following vehicle 300 to perform deceleration promptly. At this time, it is preferable for the braking activation unit 17 to moderate a deceleration gradient (i.e., variations in deceleration) in the preliminary braking in comparison a deceleration gradient to be determined when the following vehicle 300 travels at constant speed. This is because, due to a gentle rising gradient of deceleration, and accordingly, it is possible to reduce the mental burden (e.g., an uncomfortable feeling) applied to the driver of the following vehicle 300 caused by making the timing of activating the preliminary braking early.

In contrast, upon determining that the following vehicle 300 is decelerated, it is preferable for the braking activation unit 17 to delay the activation timing of the preliminary braking later than the activation timing to be determined when the following vehicle 300 travels at constant speed. In other words, the braking activation unit 17 may bring the braking start line Z close to the intersection 30a rather than the normal position thereof. This is because, when the following vehicle 300 is decelerated, it is possible to reduce a risk of the rear-end collision which might occur when the driver applies the brake to the vehicle 100 by oneself.

It is preferable for the following vehicle detection unit 12 to intermittently measure the acceleration or deceleration of the following vehicle 300. Upon determining a high frequency of acceleration in the same following vehicle 300, it is preferable for the braking activation unit 17 to activate the preliminary braking at an earlier timing than the timing to be determined when the following vehicle 300 travels at constant speed. In such a case, the braking start line Z may be set to a position ahead of the normal position thereof. This is because, when the following vehicle 300 is intermittently accelerated, the driver of the following vehicle 300 tends to frequently drive the vehicle roughly, and therefore it is highly likely that the following vehicle 300 would be accelerated again just before the vehicle 100 approaches the intersection 30a.

Upon determining a high relative speed between the following vehicle 300 and the vehicle 100, it is preferable for the braking activation unit 17 to activate the preliminary braking at an earlier timing than the timing to be determined when the vehicle 100 and the following vehicle 300 travel at constant speed. This is because it is likely that the following vehicle 300 cannot react to the sudden braking of the vehicle 100 when the following vehicle 300 travels at high speed even though the following vehicle 300 is not accelerated. The main constituent for determining the timing of the preliminary braking based on the above acceleration state of the following vehicle 300 may be either the braking activation unit 17 or the TTC determination unit 15.

The preliminary braking device 10 can be configured as a computer including a processor such as a CPU (Central Processing Unit), and a semiconductor storage device such as ROM (Read Only Memory) and RAM (Random Access Memory), or a storage device such as HDD (Hard Disk Unit).

In this case, it is possible to realize the functions of the TTC determination unit 15, the deceleration possibility determination unit 16, and the braking activation unit 17 by use of the processor to execute predetermined programs stored in the storage device. The functionality of the preliminary braking device 10 is not necessarily limited to software processing, and therefore the functionality can be realized by hardware such as ASIC (Application Specific Integration Circuit) and FPGA (Field-Programmable Gate Array).

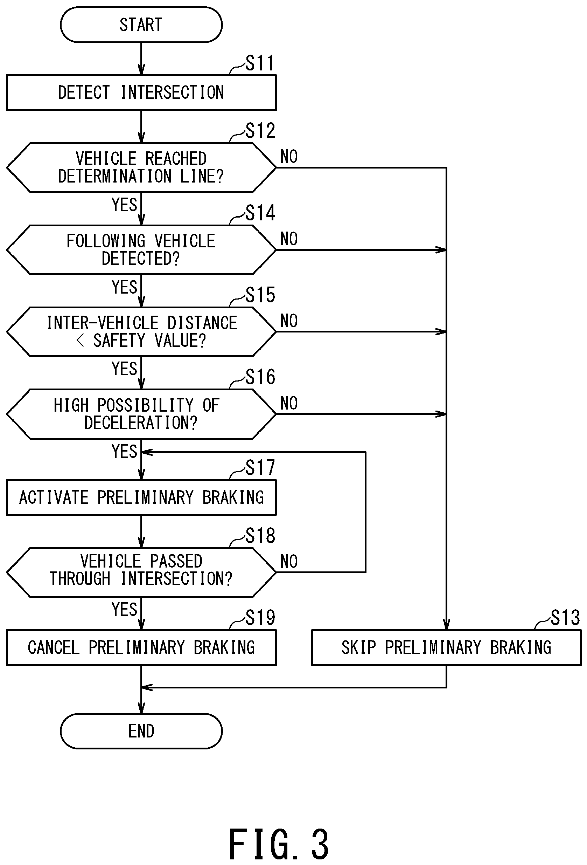

Next, the operation (e.g., a preliminary braking process) of the preliminary braking device 10 will be described with reference to the flowchart in Fig. 3. In this connection, Fig. 3 includes a series of steps S11 to S19; however, the steps are denoted only by reference numerals in the following description, and the term "step" will be omitted as necessary.

First, the deceleration area detection unit 14 detects the intersection 30a on the road 28 during the traveling of the vehicle 100 (S11).

Before the vehicle 100 reaches the determination line G, the preliminary braking and the operation of detecting the following vehicle for the sake of the preliminary braking are not performed (when NO in S12, the flow proceeds to S13). This is because frequently applying unnecessary automatic braking might cause mental burden (e.g., any feeling of anxiety and uncomfortableness) to the driver and passengers. After step S13, the preliminary braking process is ended.

When the vehicle 100 reaches the determination line G, the following vehicle detection unit 12 acquires the information about the following vehicle 300 (i.e., when YES in S12, the flow proceeds to S14).

When the following vehicle 300 is not detected, the preliminary braking is not activated (when NO in S14, the flow proceeds to S13).

In contrast, when the following vehicle 300 is detected, the following vehicle detection unit 12 measures the inter-vehicle distance D to the following vehicle 300 (when YES in S14, the flow proceeds to S15). As the inter-vehicle distance D, it is preferable to calculate the time-to-collision (TTC).

When the measured inter-vehicle distance D is larger than or equal to a prescribed safety value (i.e., NO in S15), it is unlikely for the vehicle 100 to collide with the following vehicle 300 even when the driver of the vehicle 100 suddenly applies the brake immediately before the vehicle 100 approaches the intersection 30a or during a period of time when the vehicle 100 approaches the intersection 30a. In this case, the preliminary braking is not activated (S13).

In contrast, when the inter-vehicle distance D is smaller than the prescribed safety value (i.e., YES in S15), when the driver of the vehicle 100 suddenly applies the brake, the following vehicle 300 may collide with the rear end of the vehicle 100. Therefore, the deceleration possibility determination unit 16 determines as to whether or not the vehicle 100 is in a situation showing a high possibility of deceleration (S16). When the deceleration possibility determination unit 16 determines that the vehicle 100 is not in the situation showing a high possibility of deceleration, the preliminary braking is not activated (when NO in S16, the flow proceeds to S13). As described above, when any one of steps S12, S14, S15, and S16 produces its determination result of "NO", the flow proceeds to step S13 to exit the preliminary braking process without activating preliminary braking.

In contrast, when the deceleration possibility determination unit 16 determines that vehicle 100 is in the situation showing a high possibility of deceleration, the braking activation unit 17 activates the preliminary braking (when YES in S16, the flow proceeds to S17). The braking activation unit 17 controls the brake system 21 to apply the preliminary braking when the vehicle 100 passes through the braking start line Z. At this time, upon determining that the following vehicle 300 is accelerated based on the information from the following vehicle detection unit 12, it is preferable for the braking activation unit 17 to activate the preliminary braking at an earlier timing than the timing to be determined when the following vehicle 300 travels at constant speed. At this time, it is preferable to moderate a deceleration gradient in the preliminary braking in comparison with a deceleration gradient to be determined when the following vehicle 300 travels at constant speed. In contrast, upon determining that that the following vehicle 300 is decelerated, it is preferable for the braking activation unit 17 to activate the preliminary braking at a later timing than the timing to be determined when the following vehicle 300 travels at constant speed.

Before the vehicle 100 passes through the intersection 30a on the road 28, the activation of the preliminary braking will not be released (when NO in S18, the flow returns to S17).

In contrast, after the vehicle 100 passes through the intersection 30a, the preliminary braking will be released by, for example, the driver's intention (when YES in S18, the flow proceeds to S19). After step S19, the preliminary braking process is ended.

As described above, the preliminary braking device 10 according to the embodiment is designed to apply the preliminary braking in a situation that the following vehicle 300 would collide with the rear end of the vehicle 100 when the driver of the vehicle 100 suddenly applies the brake in the deceleration area 30, which may cause the following vehicle 300 to apply the brake. This makes it possible for the vehicle 100 to travel in the deceleration area 30 at safe speed in consideration of the existence of the following vehicle 300. In addition, the preliminary braking can reduce variations in deceleration when the driver of the vehicle 100 suddenly applies the brake, which may reduce a possibility of the rear-end collision. In this connection, the preliminary braking is weak braking; hence, even when the preliminary braking is activated in a situation showing no necessity of braking, passengers will not be exposed to dangers, and therefore mental burden (e.g., a feeling of anxiety and uncomfortableness) will not be applied to passengers. In addition, it is possible to prevent unnecessary activation of the preliminary braking by providing the predetermined condition for activating the preliminary braking.

For example, the present embodiment refers to the example for determining the presence/absence of intersections and for measuring distances to intersections in view of rhombic markings painted on roads; however, this is not a restriction. For example, the deceleration area detection unit may detect the deceleration area in view of other road markings.

### REFERENCE SIGNS LIST

- 10: Preliminary braking device
- 11: Surrounding situation detection unit
- 12: Following vehicle detection unit
- 13: Preceding vehicle detection unit
- 14: Deceleration area detection unit
- 15: Time-to-collision determination unit (TTC determination unit)
- 16: Deceleration possibility determination unit
- 17: Braking activation unit
- 18: Brake ECU
- 19: Deceleration area detection unit
- 21: (21a) Brake system (brake pedal)
- 22: Display unit
- 23: Blinker
- 24: Wheel speed sensor
- 25: In-vehicle network
- 28: Road
- 30: (30a, 30b) Deceleration area (intersection, crosswalk)
- 31: Traveling lane
- 34: Traffic signal for pedestrians
- 33: Traffic signal
- 100: Vehicle
- 200: Preceding vehicle
- 300: Following vehicle
- D: Inter-vehicle distance to following vehicle
- G: Determination line
- M: Inter-vehicle distance to preceding vehicle
- Z: Braking start line

## Claims

1. A preliminary braking device (10) comprising:
a following vehicle detection unit (12) configured to detect vehicle speed of a following vehicle (300) following a vehicle (100) and an inter-vehicle distance (D) to the following vehicle (300);
a deceleration area detection unit (14) configured to detect a deceleration area (30) provided for deceleration of the vehicle (100) in a traveling lane (31) ahead of the vehicle (100); and
a braking activation unit (17) configured to, when the inter-vehicle distance (D) to the following vehicle (300) is smaller than a predetermined value when the vehicle (100) passes through a position before the deceleration area (30) by a predetermined distance, cause a brake system (21) to activate preliminary braking for generating deceleration smaller than or equal to a predetermined value.

2. The preliminary braking device (10) according to claim 1, wherein the predetermined value of the inter-vehicle distance (D) is defined by a time-to-collision (TTC).

3. The preliminary braking device (10) according to claim 1, wherein the predetermined value of the inter-vehicle distance (D) is defined by a physical distance between the vehicle (100) and the following vehicle (300).

4. The preliminary braking device (10) according to claim 1, further comprising a deceleration possibility determination unit (16) configured to estimate a possibility that the brake system (21) is operated by a driver of the vehicle (10) in the deceleration area (30), wherein
when the possibility is higher than or equal to a predetermined value, the braking activation unit (17) causes the brake system (21) to activate the preliminary braking.

5. The preliminary braking device (10) according to claim 4, wherein the deceleration possibility determination unit (16) is configured to determine that the deceleration possibility of the vehicle (100) is higher than or equal to the predetermined value in at least one of an event in which a preceding vehicle (200) ahead of the vehicle (100) is decelerated within the predetermined distance from the vehicle (100), an event in which a traffic signal (33) installed on the traveling lane (31) of the vehicle (100) in the deceleration area (30) indicates vehicle's traveling prohibition, an event of estimating switching of the traffic signal (33), an event in which a traffic signal for pedestrians (34) in a crosswalk (30b) laid on the traveling lane (31) in the deceleration area (30) indicates pedestrian's crossing caution, and an event in which a direction indicator (23) is operated in the vehicle (100).

6. The preliminary braking device (10) according to claim 1, wherein, upon determining that the following vehicle (300) is accelerated, the braking activation unit (17) is configured to activate the preliminary braking at an earlier timing than a timing to be determined when the following vehicle (300) travels at constant speed.

7. The preliminary braking device (10) according to claim 1, wherein upon determining that the following vehicle (300) is accelerated, the braking activation unit (17) is configured to moderate a deceleration gradient in the preliminary braking in comparison with a deceleration gradient to be determined when the following vehicle (300) travels at constant speed.

8. The preliminary braking device (10) according to claim 1, wherein upon determining that the following vehicle (300) is decelerated, the preliminary braking unit (17) is configured to activate the preliminary braking at a later timing than a timing to be determined when the following vehicle (300) travels at constant speed.

9. The preliminary braking device (10) according to claim 1, wherein upon determining a high acceleration frequency of the following vehicle (300), the braking activation unit (17) is configured to activate the preliminary braking at an earlier timing than a timing to be determined when the following vehicle (300) travels at constant speed.

10. The preliminary braking device (10) according to claim 1, wherein upon determining a high relative speed of the following vehicle (300) to the vehicle (100), the braking activation unit (17) is configured to activate the preliminary braking at an earlier timing than a timing to be determined when the vehicle (100) and the following vehicle (300) travel at equal speed.

11. A preliminary braking method comprising:
detecting vehicle speed of a following vehicle (300) following a vehicle (100) and an inter-vehicle distance (D) to the following vehicle (300);
detecting a deceleration area (30) provided for deceleration of the vehicle (100) in a traveling lane (31) ahead of the vehicle (100); and
when the inter-vehicle distance (D) to the following vehicle (300) is smaller than a predetermined value when the vehicle (100) passes through a first position before the deceleration area (30) by a first distance, causing a brake system (21) to activate preliminary braking for generating deceleration smaller than or equal to a predetermined value at a second position before the deceleration area by a second distance smaller than the first distance.

## Patentansprüche

1. Vorbremsvorrichtung (10), umfassend:
eine nachfolgendes Fahrzeug-Detektionseinheit (12), welche dazu eingerichtet ist, eine Fahrzeuggeschwindigkeit eines nachfolgenden Fahrzeugs (300), welches einem Fahrzeug (100) folgt, und eine Fahrzeugzwischendistanz (D) zu dem nachfolgenden Fahrzeug (300) zu detektieren;
eine Verlangsamungsbereich-Detektionseinheit (14), welche dazu eingerichtet ist, einen Verlangsamungsbereich (30) zu detektieren, welcher für eine Verlangsamung des Fahrzeugs (100) in einer Fahrspur (31) vor dem Fahrzeug (100) bereitgestellt ist; und
eine Bremsaktivierungseinheit (17), welche dazu eingerichtet ist, ein Bremssystem (21) dazu zu veranlassen, ein Vorbremsen zum Erzeugen einer Verlangsamung zu aktivieren, welche geringer als oder gleich wie ein vorbestimmter Wert ist, wenn die Fahrzeugzwischendistanz (D) zu dem nachfolgenden Fahrzeug (300) geringer als ein vorbestimmter Wert ist, wenn das Fahrzeug (100) eine Position vor dem Verlangsamungsbereich (30) um eine vorbestimmte Distanz passiert.

2. Vorbremsvorrichtung (10) nach Anspruch 1, wobei der vorbestimmte Wert der Fahrzeugzwischendistanz (D) durch eine Zeit bis zur Kollision (TTC) definiert ist.

3. Vorbremsvorrichtung (10) nach Anspruch 1, wobei der vorbestimmte Wert der Fahrzeugzwischendistanz (D) durch eine physische Distanz zwischen dem Fahrzeug (100) und dem nachfolgenden Fahrzeug (300) definiert ist.

4. Vorbremsvorrichtung (10) nach Anspruch 1, ferner umfassend eine Verlangsamungsmöglichkeit-Bestimmungseinheit (16), welche dazu eingerichtet ist, eine Möglichkeit zu schätzen, dass das Bremssystem (21) in dem Verlangsamungsbereich (30) durch einen Fahrer des Fahrzeugs (10) betätigt wird, wobei
wenn die Möglichkeit höher als oder gleich wie ein vorbestimmter Wert ist, die Bremsaktivierungseinheit (17) das Bremssystem (21) dazu veranlasst, das Vorbremsen zu aktivieren.

5. Vorbremsvorrichtung (10) nach Anspruch 4, wobei die Verlangsamungsmöglichkeit-Bestimmungseinheit (16) dazu eingerichtet ist, zu bestimmen, dass die Verlangsamungsmöglichkeit des Fahrzeugs (100) bei wenigstens einem Event, bei welchem ein vorausfahrendes Fahrzeug (200) vor dem Fahrzeug (100) innerhalb der vorbestimmten Distanz von dem Fahrzeug (100) verlangsamt wird, einem Event, bei welchem ein Verkehrssignal (33), welches an der Fahrspur (31) des Fahrzeugs (100) in dem Verlangsamungsbereich installiert ist, ein Fahrverbot des Fahrzeugs indiziert, einem Event eines Schätzens eines Wechselns des Verkehrssignals (33), einem Event, bei welchem ein Verkehrssignal für Fußgänger (34) auf einem Fußgängerüberweg (30b), welcher auf der Fahrspur (31) in dem Verlangsamungsbereich liegt, eine Überquerungswarnung eines Fußgängers indiziert, und einem Event, bei welchem ein Richtungsanzeiger (23) in dem Fahrzeug (100) betätigt wird, höher als oder gleich wie der vorbestimmte Wert ist.

6. Vorbremsvorrichtung (10) nach Anspruch 1, wobei, im Zuge einer Bestimmung, dass das nachfolgende Fahrzeug (300) beschleunigt wird, die Bremsaktivierungseinheit (17) dazu eingerichtet ist, das Vorbremsen an einem früheren Zeitpunkt als einem Zeitpunkt zu aktivieren, welcher zu bestimmen ist, wenn das nachfolgende Fahrzeug (300) mit einer konstanten Geschwindigkeit fährt.

7. Vorbremsvorrichtung (10) nach Anspruch 1, wobei, im Zuge einer Bestimmung, dass das nachfolgende Fahrzeug (300) beschleunigt wird, die Bremsaktivierungseinheit (17) dazu eingerichtet ist, einen Verlangsamungsgradienten bei der Vorbremsung im Vergleich zu einem Verlangsamungsgradienten zu mäßigen, welcher zu bestimmen ist, wenn das nachfolgende Fahrzeug (300) mit einer konstanten Geschwindigkeit fährt.

8. Vorbremsvorrichtung (10) nach Anspruch 1, wobei, im Zuge einer Bestimmung, dass das nachfolgende Fahrzeug (300) verlangsamt wird, die Vorbremseinheit (17) dazu eingerichtet ist, das Vorbremsen an einem späteren Zeitpunkt als einem Zeitpunkt zu aktivieren, welcher zu bestimmen ist, wenn das nachfolgende Fahrzeug (300) mit einer konstanten Geschwindigkeit fährt.

9. Vorbremsvorrichtung (10) nach Anspruch 1, wobei, im Zuge einer Bestimmung einer hohen Beschleunigungsfrequenz des nachfolgenden Fahrzeugs (300), die Bremsaktivierungseinheit (17) dazu eingerichtet ist, das Vorbremsen an einem früheren Zeitpunkt als einem Zeitpunkt zu aktivieren, welcher zu bestimmen ist, das nachfolgende Fahrzeug (300) mit einer konstanten Geschwindigkeit fährt.

10. Vorbremsvorrichtung (10) nach Anspruch 1, wobei, im Zuge einer Bestimmung einer hohen Relativgeschwindigkeit des nachfolgenden Fahrzeugs (300) zu dem Fahrzeug (100), die Bremsaktivierungseinheit (17) dazu eingerichtet ist, das Vorbremsen an einem früheren Zeitpunkt als einem Zeitpunkt zu aktivieren, welcher zu bestimmen ist, wenn das Fahrzeug (100) und das nachfolgende Fahrzeug (300) mit gleicher Geschwindigkeit fahren.

11. Vorbremsverfahren, umfassend:
Detektieren einer Fahrzeuggeschwindigkeit eines nachfolgenden Fahrzeugs (300), welches einem Fahrzeug (100) folgt, und einer Fahrzeugzwischendistanz (D) zu dem nachfolgenden Fahrzeug (300);
Detektieren eines Verlangsamungsbereichs (30), welcher für eine Verlangsamung des Fahrzeugs (100) in einer Fahrspur (31) vor dem Fahrzeug (100) bereitgestellt ist; und
wenn die Fahrzeugzwischendistanz (D) zu dem nachfolgenden Fahrzeug (300) geringer als ein vorbestimmter Wert ist, wenn das Fahrzeug (100) eine erste Position vor dem Verlangsamungsbereich (30) um eine erste Distanz passiert, Veranlassen eines Bremssystems (21), um an einer zweiten Position vor dem Verlangsamungsbereich ein Vorbremsen zum Erzeugen einer Verlangsamung, welche geringer als oder gleich wie ein vorbestimmter Wert ist, um eine zweite Distanz zu aktivieren, welche geringer als die erste Distanz ist.

## Revendications

1. Dispositif de freinage préliminaire (10) comprenant :
une unité de détection de véhicule suivant (12) configurée pour détecter la vitesse de véhicule d'un véhicule suivant (300) qui suit un véhicule (100) et une distance entre véhicules (D) jusqu'au véhicule suivant (300) ;
une unité de détection de zone de décélération (14) configurée pour détecter une zone de décélération (30) prévue pour la décélération du véhicule (100) dans une voie de circulation (31) devant le véhicule (100) ; et
une unité d'activation de freinage (17) configurée pour, lorsque la distance entre véhicules (D) jusqu'au véhicule suivant (300) est inférieure à une valeur prédéterminée lorsque le véhicule (100) passe par une position avant la zone de décélération (30) d'une distance prédéterminée, amener un système de freinage (21) à activer un freinage préliminaire pour générer une décélération inférieure ou égale à une valeur prédéterminée.

2. Dispositif de freinage préliminaire (10) selon la revendication 1, dans lequel la valeur prédéterminée de la distance entre véhicules (D) est définie par un temps avant collision (TTC).

3. Dispositif de freinage préliminaire (10) selon la revendication 1, dans lequel la valeur prédéterminée de la distance entre véhicules (D) est définie par une distance physique entre le véhicule (100) et le véhicule suivant (300).

4. Dispositif de freinage préliminaire (10) selon la revendication 1, comprenant en outre une unité de détermination de possibilité de décélération (16) configurée pour estimer une possibilité que le système de freinage (21) soit actionné par un conducteur du véhicule (10) dans la zone de décélération (30), dans lequel
lorsque la possibilité est supérieure ou égale à une valeur prédéterminée, l'unité d'activation de freinage (17) amène le système de freinage (21) à activer le freinage préliminaire.

5. Dispositif de freinage préliminaire (10) selon la revendication 4, dans lequel l'unité de détermination de possibilité de décélération (16) est configurée pour déterminer que la possibilité de décélération du véhicule (100) est supérieure ou égale à la valeur prédéterminée dans au moins un parmi un événement au cours duquel un véhicule précédent (200) devant le véhicule (100) décélère sur la distance prédéterminée relativement au véhicule (100), un événement au cours duquel un feu de signalisation (33) installé sur la voie de circulation (31) du véhicule (100) dans la zone de décélération (30) indique l'interdiction de circulation du véhicule, un événement d'estimation de changement du feu de signalisation (33), un événement au cours duquel un feu de signalisation pour piétons (34) sur un passage pour piétons (30b) placé sur la voie de circulation (31) dans la zone de décélération (30) indique un avertissement relatif à la traversée de piétons, et un événement au cours duquel un indicateur de direction (23) est actionné dans le véhicule (100).

6. Dispositif de freinage préliminaire (10) selon la revendication 1, dans lequel, lorsqu'il est déterminé que le véhicule suivant (300) accélère, l'unité d'activation de freinage (17) est configurée pour activer le freinage préliminaire à un moment antérieur à un moment devant être déterminé lorsque le véhicule suivant (300) circule à une vitesse constante.

7. Dispositif de freinage préliminaire (10) selon la revendication 1, dans lequel, lorsqu'il est déterminé que le véhicule suivant (300) accélère, l'unité d'activation de freinage (17) est configurée pour modérer un gradient de décélération lors du freinage préliminaire par rapport à un gradient de décélération devant être déterminé lorsque le véhicule suivant (300) circule à une vitesse constante.

8. Dispositif de freinage préliminaire (10) selon la revendication 1, dans lequel, lorsqu'il est déterminé que le véhicule suivant (300) décélère, l'unité de freinage préliminaire (17) est configurée pour activer le freinage préliminaire à un moment ultérieur à un moment devant être déterminé lorsque le véhicule suivant (300) circule à une vitesse constante.

9. Dispositif de freinage préliminaire (10) selon la revendication 1, dans lequel, lorsqu'une fréquence d'accélération élevée du véhicule suivant (300) est déterminée, l'unité d'activation de freinage (17) est configurée pour activer le freinage préliminaire à un moment antérieur à un moment devant être déterminé lorsque le véhicule suivant (300) circule à une vitesse constante.

10. Dispositif de freinage préliminaire (10) selon la revendication 1, dans lequel, lorsqu'une vitesse relative élevée du véhicule suivant (300) vis-à-vis du véhicule (100) est déterminée, l'unité d'activation de freinage (17) est configurée pour activer le freinage préliminaire à un moment antérieur à un moment devant être déterminé lorsque le véhicule (100) et le véhicule suivant (300) circulent à vitesse égale.

11. Procédé de freinage préliminaire comprenant :
la détection de la vitesse de véhicule d'un véhicule suivant (300) qui suit un véhicule (100) et d'une distance entre véhicules (D) jusqu'au véhicule suivant (300) ;
la détection d'une zone de décélération (30) prévue pour la décélération du véhicule (100) dans une voie de circulation (31) devant le véhicule (100) ; et
lorsque la distance entre véhicules (D) jusqu'au véhicule suivant (300) est inférieure à une valeur prédéterminée lorsque le véhicule (100) passe par une première position avant la zone de décélération (30) d'une première distance, le fait d'amener un système de freinage (21) à activer un freinage préliminaire pour générer une décélération inférieure ou égale à une valeur prédéterminée à une seconde position avant la zone de décélération d'une seconde distance inférieure à la première distance.
